# EUROPÄISCHE PATENTSCHRIFT

(11) **EP 3 694 737 B1**
(45) Veröffentlichungstag und Bekanntmachung des Hinweises auf die Patenterteilung: **10.11.2021**
(21) Anmeldenummer: 18773367.0
(22) Anmeldetag: 11.09.2018
(51) Int. Cl.: B60K 6/48, B60K 6/387

(54) **ANTRIEBSANORDNUNG**
DRIVE ARRANGEMENT
DISPOSITIF D'ENTRAÎNEMENT

(30) Priorität: 09.10.2017 DE 102017217936
(43) Veröffentlichungstag der Anmeldung: 19.08.2020
(73) Patentinhaber: ZF Friedrichshafen AG, 88046 Friedrichshafen (DE)
(72) Erfinder: CUDOK, Matthias, 98617 Ritschenhausen (DE); GEIGER, Martin, 97261 Güntersleben (DE)
(74) Vertreter: ZF Friedrichshafen AG
(86) Internationale Anmeldenummer: PCT/EP2018/074487
(87) Internationale Veröffentlichungsnummer: WO 2019/072474

(56) Entgegenhaltungen:
- WO-A1-2010/060771
- WO-A2-2007/138353
- DE-A1-102007 043 737
- DE-A1-102015 214 041
- DE-C1- 19 704 786

## Beschreibung

Die Erfindung betrifft eine Antriebsanordnung zur Dämpfung und Übertragung eines Drehmoments eines Verbrennungsmotors gemäß dem Oberbegriff des unabhängigen Patentanspruchs.

Aus unterschiedlichen Gründen kann es notwendig sein, im Antriebsstrang, beispielsweise von Kraftfahrzeugen, Systeme zur Schwingungsreduktion einzubringen. Solche Systeme können beispielsweise dazu dienen, Schwingungen, die aus dem Verbrennungsmotor resultieren zu dämpfen.

Auch bei Hybridfahrzeugen, die einen Verbrennungsmotor und eine elektrische Maschine als Antrieb umfassen, werden für eine Reduzierung der Schwingungen im Antriebsstrang, die meist in der Hauptsache durch den Verbrennungsmotor verursacht werden, oft komplexe Schwingungsreduktionssysteme eingesetzt. Beispielhaft sind Zweimassenschwungräder und Fliehkraftpendelsysteme.

Eine solche Antriebsanordnung ist beispielsweise aus der DE 199 15 926 A1 bekannt. Diese Antriebsanordnung umfasst einen Verbrennungsmotor und einen als Starter-Generator ausgebildete elektrische Maschine. Die elektrische Maschine steht zur Untersetzung ihrer Drehzahl mit einem schaltbaren Planetengetriebe mit der Getriebeeingangswelle in Wirkverbindung. Zur Dämpfung von Schwingungen und Torsionen können in das Planetengetriebe, insbesondere in den Planetenträger, zwei Torsionsdämpfer integriert sein.

Diese und andere Systeme sind oft teuer und können unter Umständen nur bedingt unterschiedliche Anregungsfrequenzen reduzieren, beispielsweise bei einer Zylinderabschaltung des Verbrennungsmotors. Des Weiteren sind diese Systeme in der Regel nicht modulierbar, das heißt die Systeme besitzen ein festgelegtes Schwingungsverhalten im Antriebsstrang.

Eine Antriebsanordnung der eingangs genannten Art ist bereits mit der DE 197 04 786 C1 bekannt geworden. Diese umfasst einen Torsionsdämpfer mit einer Eingangsseite und mit einer Ausgangsseite, über welche ein Drehmoment auf eine Abtriebsseite der Antriebsanordnung übertragen werden kann. Die Eingangsseite des Torsionsdämpfers kann dabei mit einem Drehmoment eines Verbrennungsmotors und über eine als bekanntes Planetengetriebe ausgebildete Vorübersetzungseinrichtung mit einem Drehmoment einer elektrischen Maschine beaufschlagt werden. Der Rotor der elektrischen Maschine ist zu diesem Zweck mit einem Sonnenrad des mit einer Festübersetzung ausgebildeten Getriebes verbunden. Im Drehmomentfluss zwischen der Vorübersetzungseinrichtung und der Eingangsseite des Torsionsdämpfers ist eine als Reibungskupplung ausgebildete Trennkupplung vorgesehen, wodurch die elektrische Maschine und die Vorübersetzungseinrichtung abkoppelbar sind, so dass das Drehmoment der elektrischen Maschine bei geöffneter Kupplung nicht in die Eingangsseite des Torsionsdämpfers eingeleitet wird.

Von dem erläuterten Stand der Technik ausgehend stellt sich die Erfindung die Aufgabe, eine alternative und verbesserte gattungsgemäße Antriebsanordnung bereitzustellen. Diesem Bedarf trägt die Antriebsanordnung mit den Merkmalen des unabhängigen Patentanspruchs Rechnung. In den abhängigen Ansprüchen sind Ausgestaltungen und Weiterbildungen der Erfindung angegeben.

Die vorgeschlagene Antriebsanordnung zeichnet sich gegenüber dem Stand der Technik dadurch aus,
- dass das Hohlrad drehfest mit dem Rotor der elektrischen Maschine verbunden ist und
- dass der Planetenträger drehfest mit der Eingangsseite des Torsionsdämpfers verbunden ist, wobei
- die Vorübersetzungseinrichtung eine erste Kupplungsanordnung aufweist, die ausgebildet und angeordnet ist, um in einem Schaltzustand bei geschlossener erster Kupplungsanordnung eine Drehbeweglichkeit des Sonnenrads zu sperren, so dass dadurch ein Drehmoment von dem Rotor der elektrischen Maschine auf das Hohlrad übertragen wird und das Hohlrad die Planetenräder antreibt und sich diese auf dem feststehenden Sonnenrad abwälzen, sodass der Planetenträger mitbewegt wird und das Drehmoment auf die Eingangsseite des Torsionsdämpfers überträgt.

Bei der Antriebsanordnung ist die elektrische Maschine im Antriebsstrang so platziert, dass sie durch Einbringung eines modulierten Drehmoments der Anregung des Verbrennungsmotors entgegenwirken kann.

Die Eingangsseite des Torsionsdämpfers kann eine erste Teileingangsseite und eine zweite Teileingangsseite umfassen. Die erste Teileingangsseite kann beispielsweise ausgebildet sein, um mit dem Drehmoment des Verbrennungsmotors beaufschlagt zu werden. Der Verbrennungsmotor kann über eine Trennkupplung mit der ersten Teileingangsseite des Torsionsdämpfers verbunden sein, sodass ein Drehmomentfluss zwischen dem Verbrennungsmotor und der ersten Teileingangsseite des Torsionsdämpfers unterbrochen werden kann. Dies kann beispielsweise in Betriebszuständen, in denen das Fahrzeug steht oder nur ein elektrischer Antrieb erfolgen soll, gewünscht sein. Die zweite Teileingangsseite kann zum Beispiel ausgebildet sein, um über die Vorübersetzungseinrichtung, zumindest in bestimmten Betriebszuständen, mit dem Drehmoment der elektrischen Maschine beaufschlagt zu werden. Die erste Teileingangsseite und die zweite Teileingangsseite können beispielsweise in radialer und/oder axialer Richtung auf unterschiedlichen Höhen angeordnet sein. Bei manchen Ausführungsbeispielen kann der Torsionsdämpfer genau zwei Teileingangsseiten aufweisen, eine zur Aufnahme des von dem Verbrennungsmotor erzeugten Drehmoments und eine zur Aufnahme des von der elektrischen Maschine erzeugten Drehmoments.

Mittels der ersten Kupplungsanordnung ist ein Abkoppeln der elektrischen Maschine auf einfache Art und Weise möglich. Dies kann beispielsweise in einem Sicherheitsfall, bei einer gewünschten reinen Verbrennungsmotorbeschleunigung und/oder bei einer Gangschaltung in einem Getriebe, das der Antriebsanordnung nachgeschaltet ist, zur Erhöhung der Schaltdynamik sinnvoll sein. Bei der ersten Kupplungsanordnung kann es sich um jedwede Einrichtung handeln, die ausgebildet ist, um die Drehbeweglichkeit des Sonnenrads zu unterbinden bzw. einzuschränken. Dazu kann jedwede Art von Kupplung, beispielsweise eine Formschlusskupplung, Reibkupplung oder eine Klauenkupplung eingesetzt werden.

Durch das Vorsehen der Vorübersetzungseinrichtung kann erreicht werden, dass das notwendige schwingungsdämpfende Moment der elektrischen Maschine reduziert werden kann. Beispielsweise kann das Drehmoment bei geschlossener erster Kupplungsanordnung mit einer Übersetzung i größer 1 von der elektrischen Maschine auf die Eingangsseite des Torsionsdämpfers übertragen werden.

Bei geöffneter erster Kupplungsanordnung ist das Sonnenrad drehbeweglich gelagert. Dadurch wird auf einfache Art und Weise verhindert, dass das Drehmoment der elektrischen Maschine auf die Abtriebsseite der Antriebsanordnung übertragen wird. Dies ist möglich, weil sich die durch das Hohlrad angetriebenen Planetenräder, um die eigene Achse drehen und dadurch das Sonnenrad antreiben. Das Abrollen auf dem Sonnenrad bleibt also aus und der Planetenträger bzw. ein mit diesem verbundener Steg wird trotz der Planetenbewegung nicht in Bewegung versetzt. Dadurch lässt sich der Elektromotor entweder aus Sicherheitsgründen oder weil ein entsprechender Fahrbetrieb gewünscht ist, auf schnelle Art und Weise abkoppeln. Zudem kann das Abkoppeln der Masse des Rotors bei manchen Ausführungsbeispielen zu einer Verringerung der Massenträgheit während einer Motorbeschleunigungsphase beitragen.

Bei einigen weiteren Ausführungsbeispielen umfasst die Antriebsanordnung, zusätzlich zu der bereits beschriebenen ersten Kupplungsanordnung, eine zweite Kupplungsanordnung, die ausgebildet und angeordnet ist, um eine Drehbewegung des Planetenträgers gegenüber dem Hohlrad zu sperren. Bei manchen Ausführungsbeispielen kann dadurch ermöglicht werden, dass die Vorübersetzungseinrichtung weitere Schaltzustände einnehmen kann. Dadurch kann eine Bandbreite schwingungsdämpfender Drehmomente der elektrischen Maschine erweitert sein. Die zweite Kupplungsanordnung kann analog zu der ersten Kupplungsanordnung, beispielsweise auch als Formschlusskupplung ausgebildet sein. Durch das Vorsehen der zweiten zusätzlichen Kupplungsvorrichtung können sich bei manchen Ausführungsbeispielen drei unterschiedliche Übersetzungsstufen ergeben.

Bei manchen Ausführungsbeispielen wird der Planetenträger in einem Zustand in dem die erste Kupplungsanordnung geöffnet ist und die zweite Kupplungsanordnung geschlossen ist, direkt durch das Hohlrad und den Rotor angetrieben und das Drehmoment des Rotors wird direkt auf die Eingangsseite des Torsionsdämpfers übertragen. Bei manchen Ausführungsbeispielen kann dadurch ermöglicht werden, dass der Planetenträger das Drehmoment des Rotors mit einer Übersetzung von 1 auf die Eingangsseite des Torsionsdämpfers überträgt. Die Planetenräder werden durch das Hohlrad mitgenommen und treiben das Sonnenrad an. In einem Schaltzustand der Vorübersetzungseinrichtung, in dem die erste Kupplungsanordnung geschlossen und die zweite Kupplungsanordnung geöffnet ist, entspricht die Übersetzung dem bereits beschriebenen Ausführungsbeispiel mit nur einer ersten Kupplungsanordnung, bei geschlossener erster Kupplungsanordnung. In einem Schaltzustand der Vorübersetzungseinrichtung, in dem die erste und die zweite Kupplungsanordnung geöffnet sind, entspricht die Übersetzung dem bereits beschriebenen Ausführungsbeispiel mit nur einer ersten Kupplungsanordnung, bei geöffneter erster Kupplungsanordnung.

Ergänzend oder alternativ kann die Antriebsanordnung einen Sensor umfassen, der ausgebildet ist, um ein Sensorsignal zur Ermittlung einer Drehzahl, einer Drehlage oder einer Winkelbeschleunigung zu erfassen. Basierend auf dem erfassten Sensorsignal kann dann beispielsweise ein Schaltzustand der Vorübersetzungseinrichtung veränderbar sein. Bei manchen Ausführungsbeispielen kann dadurch beispielsweise ein Schaltzustand gewählt werden, der sich am besten zum Dämpfen der aktuell in dem Antriebsstrang auftretenden Schwingungen eignet. Beispielsweise kann der Sensor ausgebildet sein, um Schwingungen, die im Antriebsstrang auftreten, zu detektieren.

Bei manchen Ausführungsbeispielen ist zwischen der Antriebsanordnung und dem Verbrennungsmotor eine Trennkupplung vorgesehen. Der Ausgang der Trennkupplung bildet dabei den ersten Teileingangsbereich des Torsionsdämpfers oder ist mit diesem verbunden. Auf diese Weise können alle Funktionen eines Fullhybrides, wie VM-Fahren, das beispielsweise nur auf einer Antriebsleistung des Verbrennungsmotors basiert, hybridisches Fahren, das beispielsweise auf einer kombinierten Antriebsleistung der elektrischen Maschine und des Verbrennungsmotors basiert, EM-Fahren, das beispielsweise nur auf der Antriebsleitung der elektrischen Maschine und/oder VM-Start, bei dem für einen Startvorgang nur die Antriebsleistung des Verbrennungsmotors genutzt wird, ausgeführt werden.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden.

So zeigen die Figuren schematisch die nachfolgenden Ansichten:
Fig. 1 eine schematische Darstellung einer Antriebsanordnung gemäß einem Ausführungsbeispiel; und
Fig. 2 eine schematische Darstellung einer Antriebsanordnung gemäß einem weiteren Ausführungsbeispiel.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

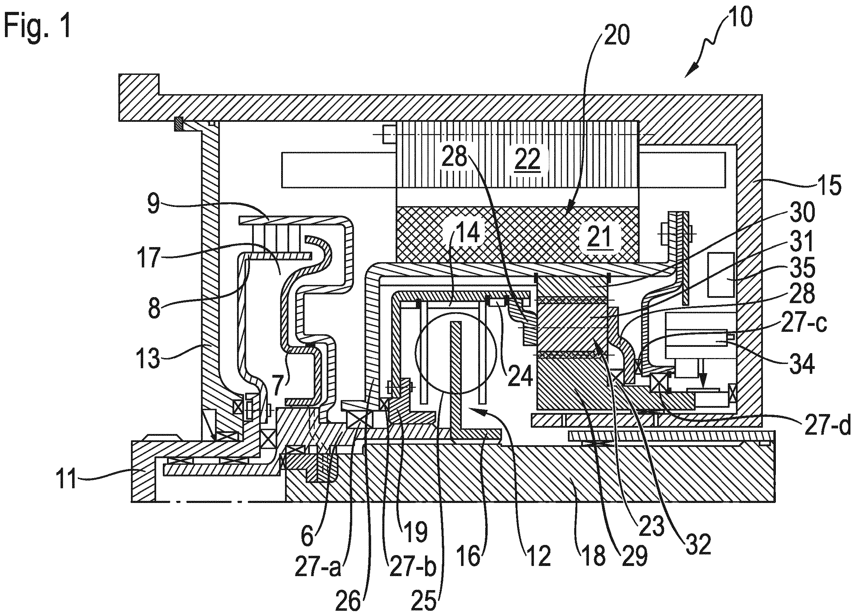

Die Fig. 1 zeigt eine schematische Darstellung einer Antriebsanordnung 10 gemäß einem Ausführungsbeispiel.

Die Antriebsanordnung 10 dient zur Dämpfung und Übertragung eines Drehmoments eines nicht dargestellten Verbrennungsmotors. Dazu umfasst die Antriebsanordnung 10 einen Torsionsdämpfer 12, der eine Eingangsseite 14 und einer Ausgangsseite 16 aufweist. Die Ausgangseite 16 ist ausgebildet, um ein Drehmoment auf eine Abtriebsseite 18 der Antriebsanordnung 10 zu übertragen. Ferner umfasst die Antriebsanordnung 10 eine elektrische Maschine 20, die ausgebildet ist, um ein Drehmoment zu erzeugen. Die elektrische Maschine 20 umfasst einen Rotor 21 und einen Stator 22. Des Weiteren umfasst die Antriebsanordnung 10 eine Vorübersetzungseinrichtung 23, die ausgebildet ist, um das Drehmoment der elektrischen Maschine 20 zu übersetzten. Die Eingangsseite 14 des Torsionsdämpfers 12 ist mit einem Drehmoment des Verbrennungsmotors und über die Vorübersetzungseinrichtung 23 mit einem Drehmoment des Elektromotors 20 beaufschlagbar.

Bei dem Ausführungsbeispiel der Fig. 1 wird das Drehmoment des Verbrennungsmotors wird über eine Eingangsnabe 11 in die Antriebanordnung 10 eingeleitet. Die Eingangsnabe 11 ist drehbeweglich gegenüber einem Lagerschild 13 gelagert, das mit einem Gehäuse 15 der Antriebsanordnung drehfest verbunden ist. An die Eingangsnabe 11 schließt eine Trennkupplung 17 an. Die Trennkupplung 17 umfasst einen Außenlamellenträger 9 und einen Innenlamellenträger 8, die über einen Kolben 7 miteinander in Reibschluss bringbar sind. Bei geschlossener Trennkupplung 17 wird das Drehmoment von der Eingangsnabe 11 über den Innenlamellenträger 8, den Außenlamellenträger 9 und eine Zwischenübertragungsnabe 6 auf die Eingangsseite 14 des Torsionsdämpfers 12 der Antriebsordnung 10 übertragen.

Die Eingangsseite 14 des Torsionsdämpfers 12 weist eine erste Teileingangsseite 19 auf, über die das Drehmoment des Verbrennungsmotors in den Torsionsdämpfer 12 eingeleitet wird und eine zweite Teileingangsseite 24, über die das Drehmoment der elektrischen Maschine 20 in den Torsionsdämpfer 12 eingeleitet wird. Dabei ist die erste Teileingangsseite 19 radial innerhalb der zweiten Teileingangsseite 24 und in axialer Richtung beabstandet zu dieser angeordnet.

Die Teileingangsseiten 19 und 24 umfassen jeweils ein kreisringscheibenförmiges Bauteil und sind parallel zueinander angeordnet. Die Teileingangsseiten 19 und 24 sind über ein Dämpferelement 25, beispielsweise einen Federsatz oder dergleichen mit der Ausgangsseite 16 des Torsionsdämpfers 12 drehelastisch und verdrehwinkelbeschränkt verbunden.

Die Ausgangseite 16 des Torsionsdämpfers 12 ist ausgebildet, um ein Drehmoment auf eine Abtriebsseite 18 der Antriebsanordnung 10 zu übertragen. Bei dem Ausführungsbeispiel der Fig. 1 handelt es sich bei der Abtriebsseite 18 um eine Getriebeeingangswelle eines nicht dargestellten Getriebes, das der Antriebsanordnung 10 nachgeschaltet ist. Bei diesem der Antriebseinrichtung nachgeschalteten Getriebe kann es sich beispielsweise um ein Schalt - oder ein Automatikgetriebe handeln. Die Getriebeeingangswelle 18 ist drehfest, beispielsweise über eine Verzahnung, mit der Ausgangseite 16 des Torsionsdämpfers 12 verbunden.

Bei einigen weiteren, nicht dargestellten Ausführungsbeispielen kann die Antriebsanordnung auch einen anderen Aufbau aufweisen, solange das Drehmoment des Verbrennungsmotors wie auch das der elektrische Maschine über die Eingangsseite in den Torsionsdämpfer eingeleitet werden und über Federn oder andere Dämpfer auf die Ausgangsseite des Torsionsdämpfers übertragen und von dieser an die Getriebeeingangswelle abgegeben werden kann.

Der Rotor 21 der elektrischen Maschine 20, die auch Elektromaschine bezeichnet werden kann, ist radial innerhalb des Stators 22 und in axialer Richtung bündig zu diesem angeordnet. Der Stator 22 der elektrischen Maschine ist drehfest mit dem Gehäuse 15 verbunden, während der Rotor 21 der elektrischen Maschine drehbeweglich gegenüber dem Gehäuse 15 gelagert ist. Dazu ist der Rotor an einem Z-förmigen Bauteil 26 drehfest befestigt, das über Lagerungen 27-a, 27-b, 27-c und 27-d drehbeweglich gegenüber der Zwischenübertragungsnabe 6 und der ersten Teileingangsseite 19 des Torsionsdämpfers 12 gelagert ist. Des Weiteren ist der Rotor 21 über die Vorübersetzungseinrichtung 23 mit der zweiten Teileingangsseite 24 des Torsionsdämpfers 12 drehfest verbunden. Bei einigen weiteren, nicht dargestellten Ausführungsbeispielen kann die elektrische Maschine auch auf andere Art und Weise ausgebildet sein, beispielsweise kann der Rotor radial außen angeordnet sein. Bei dem Ausführungsbeispiele der Fig. 1 ist die Vorübersetzungseinrichtung 23 als Planetengetriebe ausgebildet. Das Planetengetriebe 23 umfasst ein Hohlrad 30, das mit einer Mehrzahl von Planetenrädern 31, die auf dem Planetenträger 28 radial innerhalb des Hohlrads 30 gelagert sind, in Eingriff stehen. Radial innerhalb der Planetenräder 31 ist das Sonnenrad 29 angerordnet, das mit den Planetenrädern 31 in Eingriff steht. Das Sonnenrad 29 ist drehbeweglich gegenüber dem Gehäuse 15 gelagert. Über eine Kupplungsanordnung 34, kann eine Drehbeweglichkeit des Sonnenrads 29 vollständig eingeschränkt bzw. unterbunden werden. Bei der Kupplungsanordnung 34, kann es sich zum Beispiel um eine Formschlusskupplung, eine Klauenkupplung oder dergleichen handeln. Der Formschluss kann beispielsweise gegenüber einem Außenumfang des Sonnenrads 29, beispielsweise in einem Bereich außerhalb der Verzahnung hergestellt werden.

Das Planetengetriebe 23 und der Torsionsdämpfer 12 sind radial und axial innerhalb der Elektromaschine 20 angeordnet. Dadurch wird ein axial schmales Hybridmodul 10 mit verbesserter Schwingungsreduzierung gebildet.

Der Planetenträger 28 ragt in axialer Richtung über eine axiale Ausdehnung des Hohlrads 30 und der Planetenräder 31, zumindest in Richtung des Torsionsdämpfers 12 hinaus, sodass er mit der zweiten Teileingangsseite 24 des Torsionsdämpfers 12 drehfest verbindbar ist. Gegenüber einer Drehachse des Planetenrads 31 erstreckt sich ein äußeres Ende des Planetenträgers 28 auf die Seite des Torsionsdämpfers nach radial außen. Dadurch kann eine Anbindung an die zweite Teileingangsseite 24 des Torsionsdämpfers 12 erleichtert werden. Auf der in axialer Richtung gegenüberliegenden, dem Torsionsdämpfer 12 abgewandten Seite, erstreckt sich der Planetenträger 28 gegenüber einer Drehachse des Planetenrads 31 nach radial innen und ist über ein Lager 32 gegenüber dem Sonnenrad 29 drehbeweglich gelagert. Über das Lager 27-c ist der Planetenträger 28 gegenüber einem Lagerschild, an dem das Z-förmige Bauteil 26 drehfest befestigt ist, drehbeweglich gelagert. Bei einigen weiteren, nicht dargestellten Ausführungsbeispielen kann der Planetenträger auch auf jedwede andere Art und Weise an die zweite Teileingangsseite des Torsionsdämpfers angebunden sein.

Des Weiteren umfasst die Antriebsanordnung 10 einen Sensor 35. Der Sensor 35 ist radial außerhalb der Kupplungsanordnung 34 an dem Gehäuse 15 angeordnet. Der Sensor 35 kann beispielsweise ausgebildet sein, um ein Sensorsignal zur Ermittlung einer Drehzahl, einer Drehlage oder einer Winkelbeschleunigung zu erfassen. Basierend auf dem erfassten Sensorsignal kann dann beispielsweise ein Schaltzustand der Vorübersetzungseinrichtung 23 verändert werden. Bei manchen Ausführungsbeispielen kann der Sensor auch entfallen.

Zu Herstellung unterschiedlicher Übersetzungsstufen wird das Sonnenrad 29 des Planetengetriebes 23, das auch als Sonne bezeichnet werden kann, mittels der Kupplungsanordnung 34, die auch als erste Kupplungsanordnung oder Kupplungsvorrichtung bezeichnet werden kann, geschlossen und damit das Sonnenrad 29 gesperrt.

Dadurch ergeben sich folgende Übersetzungsstufen für die elektrische Maschine 20.

Bei geschlossener Kupplungsanordnung 34 ist das Sonnenrad 29 des Planetengetriebes 23 gesperrt. Der Drehmomentfluss erfolgt von dem Rotor 21 auf das Hohlrad 30. Von dem Hohlrad 30 angetrieben, drehen sich die Planetenräder 31 um die eigene Achse und wälzen sich auf dem Sonnenrad 29 ab. Das Drehmoment wird dabei über den durch die Abwälzbewegung mitbewegten Planetenträger 28 oder einen an diesem drehfest befestigten Steg auf die zweite Teileingangsseite 24, der auch als elektromotorseitiger Teileingangsbereich des Torsionsdämpfers 12, bezeichnet werden kann, übertragen. Dies kann beispielsweise dazu führen, dass das Drehmoment der elektrischen Maschine 20 durch die Vorübersetzungseinrichtung 23 mit einer Übersetzung größer als 1 (i > 1) auf den Torsionsdämpfer 12 übertragen wird. Die Übersetzung i kann beispielsweise auch größer als 1.1, 1.2, 1.3, 1.4, 1.4, 1.5, 1.6 oder 1.7 und/oder kleiner als 2 sein.

Bei geöffneter oder offener Kupplungsanordnung 34 kann sich das Sonnenrad 29 des Planetengetriebes 23 drehen und ist nicht gesperrt. Das Drehmoment des Rotors 21 wird dann nicht auf die zweite Teileingangsseite 24 des Torsionsdämpfers 12 und auch nicht auf andere Art und Weise auf den Torsionsdämpfer 12 oder die Abtriebsseite 18 der Antriebsanordnung 10 übertragen. Das System bzw. die Abtriebsseite 18 ist somit von der Rotormasse des Rotors 21 und dem von diesem ausgeübten Drehmoment entkoppelt. Dies liegt daran, dass sich die durch das Hohlrad 30 angetriebenen Planetenräder 31, die auch als Planeten bezeichnet werden können, um die eigene Achse drehen und dadurch das Sonnenrad 29 antreiben. Das Abwälzen auf dem Sonnenrad 29 bleibt aus und der Planetenträger 28 bzw. ein mit diesem verbundener Steg wird trotz der Planetenbewegung nicht in Bewegung gesetzt. In diesem Fall ist der Rotor 21 von dem System entkoppelt. Dies kann eventuell zu einer Verringerung der Massenträgheit während einer Motorbeschleunigungsphase beitragen.

Mit anderen Worten ist bei manchen Ausführungsbeispielen der Antriebsanordnung zur Verringerung der benötigten Energie der elektrischen Maschine zur Erzeugung des zur Schwingungsreduzierung notwendigen Drehmoments eine Vorübersetzung zwischen die elektrische Maschine und den Antriebstrang geschaltet. Die Antriebsanordnung, die auch als Hybridmodul bezeichnet werden kann, mit verbesserter schwingungsdämpfender Funktion weist bei manchen Ausführungsbeispielen eine Elektromaschine mit Rotor und Stator, ein Planetengetriebe und einen Torsionsdämpfer auf. Das Drehmoment des Verbrennungsmotors wie auch das der Elektromaschine wird über den Eingangsbereich in den Torsionsdämpfer eingeleitet und über die Federn und das Ausgangselement an die Getriebeeingangswelle abgegeben. Das Hohlrad des Planetengetriebes ist an dem Rotor befestigt und wird von diesem angetrieben. Die Sonne ist auf dem Gehäuse und/oder einem Lagerschild des Hybridmoduls oder des Getriebes gelagert. Zwischen dem Hohlrad und dem Sonnenrad sind die Planetenräder auf einem Steg oder Planetenträger angeordnet. Der Steg oder der Planetenträger ist mit dem elektromotorseitigen Teileingangsbereich des Torsionsdämpfers zur Drehmitnahme verbunden.

Bei manchen Ausführungsbeispielen kann durch die genannten Maßnahmen die Anzahl der Dämpfungselemente verringert werden und die elektrische Maschine im Antriebsstrang so platziert sein, dass sie durch Einbringung eines modulierten Drehmoments der Anregung des Verbrennungsmotors entgegenwirken kann. Durch das Einbringen eines dem Verbrennungsmotor entgegenwirkenden Drehmoments der Elektromaschine wird eine aktive Schwingungsreduzierung ermöglicht und dadurch die im Antriebsstrang entstehende Schwingungen, welche am Getriebe und der Achse unter ungünstigen Umständen zu Geräuschen führen kann, reduziert. Die Schwingungen im Antriebsstrang können beispielsweise in Abhängigkeit von der Drehzahl des Verbrennungsmotors entstehen. In bestimmten Bereichen können diese Schwingungen dann eventuell unangenehme Geräusche auslösen. Durch das Ansteuern der Elektromaschine kann bei manchen Ausführungsbeispielen ein beliebiges, den Schwingungen im Antriebsstrang entgegengesetztes, Drehmoment erzeugt werden und die am Getriebe ankommenden Schwingungen und Geräusche können entsprechend reduziert werden.

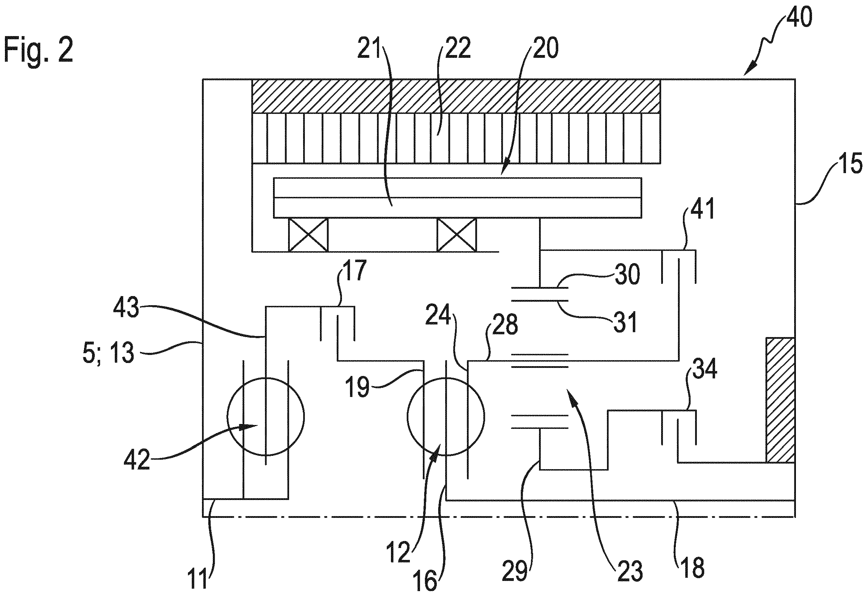

Die Fig. 2 zeigt eine schematische Darstellung einer Antriebsanordnung 40 gemäß einem weiteren Ausführungsbeispiel. Die Antriebsanordnung 40 ist im Wesentlichen ähnlich zu der Antriebsanordnung 10, unterscheidet sich aber von dieser durch eine zweite Kupplungsanordnung 41, die zusätzlich zu der ersten Kupplungsanordnung 34 vorgesehen ist. Gleiche oder ähnliche Elemente wie bei dem Ausführungsbeispiel der Fig. 1 werden deshalb ebenfalls mit den für das Ausführungsbeispiel der Fig. 1 vergebenen Bezugszeichen bezeichnet.

Die zweite Kupplungsanordnung 41 ist ausgebildet und angeordnet, um den Planetenträger 28 der Planetenräder 31 bzw. dessen Drehbeweglichkeit gegenüber dem Hohlrad 30 zu sperren. Die zweite Kupplungsanordnung 41 kann analog zu der ersten Kupplungsanordnung 34 als Formschlusskupplung ausgebildet sein bzw. eine Formschlusskupplung umfassen. Durch das Vorsehen einer weiteren Kupplungsanordnung 41, die auch als zweite Kupplungsvorrichtung bezeichnet werden kann, ergeben sich folgende Übersetzungsstufen.

Bei geöffneter erster Kupplungsanordnung 34 und geschlossener zweiter Kupplungsanordnung 41 wird der mit dem Hohlrad 30 verbundene Planetenträger 28 direkt durch das Hohlrad 30 und den Rotor 21 angetrieben. Dadurch wird das Drehmoment des Rotors 21 mit einer Übersetzung i = 1 direkt auf die zweite Teileingangsseite 24 des Torsionsdämpfers 12 übertragen. Die Planetenräder 31 werden durch das Hohlrad 30 mitgenommen und treiben das Sonnenrad 29, das sich wegen der geöffneten ersten Kupplung 34 drehen kann. Das Drehmoment des Rotors 21 entspricht in diesem Fall dem Drehmoment der zweiten Teileingangsseite 24 des Torsionsdämpfers 12, damit ist die Übersetzung i= 1.

Bei geschlossener erste Kupplungsanordnung 34 und geöffneter zweiter Kupplungsanordnung 41 entspricht die Übersetzungsstufe derjenigen der Antriebsanordnung 10 des Ausführungsbeispiels des Fig. 1 bei geschlossener Kupplungsanordnung 34.

Bei geöffneter erster und zweiter Kupplungsanordnung 34 und 41, entspricht die Übersetzungsstufe derjenigen der Antriebsanordnung 10 des Ausführungsbeispiels der Fig. 1 bei geöffneter Kupplungsanordnung 34.

Durch das Vorsehen der weiteren, zweiten Kupplungsanordnung 41 neben der ersten Kupplungsanordnung 34, kann die Bandbreite der schwingungsdämpfenden Drehmomente der Elektromaschine bei manchen Ausführungsbeispielen erweitert werden.

Zur weiteren Verbesserung des Schwingverhaltens der Antriebsanordnung 40 kann wirkungsmäßig zwischen dem Verbrennungsmotor und der Elektromaschine 20 ein weiterer Torsionsdämpfer 42 vorgehen sein. Besonders vorteilhaft ist, wenn ein Ausgang 43 des weiteren Torsionsdämpfers 42 mit dem Eingang der Trennkupplung 17 verbunden ist. Dieser Torsionsdämpfer 42 wirkt also nur, wenn die Trennkupplung 17 geschlossen ist und der Verbrennungsmotor mit dem Antriebsstrang verbunden ist. Damit wird eine Leistung der Antriebsanordnung 10, die auch als Hybridmodul bezeichnet werden kann, in einem E-Fahren, also wenn nur das Drehmoment der elektrischen Maschine 20 genutzt wird, nicht zusätzlich eingeschränkt. Bei einigen weiteren, nicht dargestellten Ausführungsbeispielen können der weitere Torsionsdämpfer 42 und/oder die Trennkupplung 17 auch entfallen.

Bei manchen Ausführungsbeispielen kann durch das Vorsehen mehrerer Übersetzungsstufen das notwendige schwingungsdämpfende Moment der Elektromaschine 20 durch die Vorübersetzungseinrichtung 23 reduziert werden. Diese spezielle Anordnung kann beispielsweise nicht nur ein verbessertes Schwingverhalten bewirken, sondern unter Umständen auch ein problemloses Wegschalten der Elektromaschine 20 ermöglichen, durch das Öffnen der ersten 34 Kupplungsanordnung bei dem Ausführungsbeispiel der Fig. 1 oder der ersten 34 Kupplungsanordnung und der zweiten Kupplungsvorrichtung 41 bei dem Ausführungsbeispiel der Fig. 2. Das Wegschalten der elektrischen Maschine kann beispielsweise in einem Sicherheitsfall oder bei gewünschter Verbrennungsmotorbeschleunigung sowie bei Gangschaltung im Getriebe zur Erhöhung der Schaltdynamik gewünscht sein.

Des Weiteren kann sich bei manchen Ausführungsbeispielen der Vorteil ergeben, dass durch das Vorgelege des Planetengetriebes 23 vor das Getriebe in bestimmen Fahrsituationen ein fiktiver Gangwechsel stattfinden kann. Wenn das Getriebe in dem für das Getriebe optimalen Gang antreibt, kann durch das Verändern der Verschaltung der Elektromaschine 20 mit dem Planetengetriebe 23 der Antriebsanordnung 10 oder 40, die auch als Schwingungsreduzierungssystem bezeichnet werden kann, durch das Schalten der Kupplungsanordnungen 34 und/oder 41 bei einem Bestehenbleiben des Getriebegangs ein Gang der elektrischen Maschine 20, der auch als EM-Gang bezeichnet werden kann, verändert werden. Bei einem Schwingungsreduzierungssystem mit zwei Planetengetrieben und zwei Kupplungsanordnungen kann also bei einen 6 Gang Getriebe eine 12 Gang Schaltung möglich sein.

Die in der vorstehenden Beschreibung, den nachfolgenden Ansprüchen und den beigefügten Figuren offenbarten Ausführungsbeispiele sowie deren einzelne Merkmale können sowohl einzeln wie auch in beliebiger Kombination für die Verwirklichung eines Ausführungsbeispiels in ihren verschiedenen Ausgestaltungen von Bedeutung sein und implementiert werden. Bei einigen weiteren Ausführungsbeispielen können Merkmale, die in anderen Ausführungsbeispielen als Vorrichtungsmerkmal offenbart sind, auch als Verfahrensmerkmale implementiert sein. Ferner können gegebenenfalls auch Merkmale, die in manchen Ausführungsbeispielen als Verfahrensmerkmale implementiert sind, in anderen Ausführungsbeispielen als Vorrichtungsmerkmale implementiert sein.

### Bezugszeichen

- 6: Zwischenübertragungsnabe
- 7: Kolben
- 8: Innenlamellenträger
- 9: Außenlamellenträger
- 10: Antriebsanordnung
- 11: Eingangsnabe
- 12: Torsionsdämpfer
- 13: Lagerschild
- 14: Eingangsseite Torsionsdämpfer
- 15: Gehäuse
- 16: Ausgangsseite Torsionsdämpfer
- 17: Trennkupplung
- 18: Abtriebsseite
- 19: erste Teileingangsseite
- 20: elektrische Maschine
- 21: Rotor
- 22: Stator
- 23: Vorübersetzungseinrichtung
- 24: zweite Teileingangsseite
- 25: Dämpferelement
- 26: Z-förmiges Bauteil
- 27: Lager
- 28: Planetenträger
- 29: Sonnenrad
- 30: Hohlrad
- 31: Planetenrad
- 32: Lager
- 33: Lager
- 34: erste Kupplungsanordnung
- 35: Sensor
- 40: Antriebsanordnung
- 41: zweite Kupplungsanordnung
- 42: zweiter Torsionsdämpfer
- 43: Ausgangseite zweiter Torsionsdämpfer

## Patentansprüche

1. Antriebsanordnung (10) zur Dämpfung und Übertragung eines Drehmoments eines Verbrennungsmotors, mit folgenden Merkmalen:
- einem Torsionsdämpfer (12) mit einer Eingangsseite (14) und einer Ausgangsseite (16), wobei die Ausgangseite (16) ausgebildet ist, um ein Drehmoment auf eine Abtriebsseite (18) der Antriebsanordnung (10) zu übertragen;
- einer elektrischen Maschine (20), die ausgebildet ist, um ein Drehmoment zu erzeugen;
- einer Vorübersetzungseinrichtung (23), die ausgebildet ist, um das Drehmoment der elektrischen Maschine (20) zu übersetzten; wobei
- die Eingangsseite (14) des Torsionsdämpfers (12) mit einem Drehmoment des Verbrennungsmotors und über die Vorübersetzungseinrichtung (23) mit einem Drehmoment der elektrischen Maschine (20) beaufschlagbar ist; wobei
- die elektrische Maschine (20) abkoppelbar ist, so dass das Drehmoment der elektrischen Maschine (20) nicht in die Eingangsseite (14) des Torsionsdämpfers (12) eingeleitet wird, wobei
- die Vorübersetzungseinrichtung (23) ein Planetengetriebe (23) umfasst, mit einem Hohlrad (30) und mit einem Planetenträger (28), der eine Mehrzahl von Planetenrädern (31) lagert und wobei die Planetenräder (31) mit dem Hohlrad (30) und mit einem Sonnenrad (29) des Planetengetriebes (23) in Eingriff stehen,
**dadurch gekennzeichnet,**
- **dass** das Hohlrad (30) drehfest mit dem Rotor (21) der elektrischen Maschine (20) verbunden ist und
- **dass** der Planetenträger (28) drehfest mit der Eingangsseite (14) des Torsionsdämpfers (12) verbunden ist und wobei
- die Vorübersetzungseinrichtung (23) eine erste Kupplungsanordnung (34) aufweist, die ausgebildet und angeordnet ist, um in einem Schaltzustand bei geschlossener erster Kupplungsanordnung (34) eine Drehbeweglichkeit des Sonnenrads (29) zu sperren, so dass dadurch ein Drehmoment von dem Rotor (21) der elektrischen Maschine (20) auf das Hohlrad (30) übertragen wird und das Hohlrad (30) die Planetenräder (31) antreibt und sich diese auf dem feststehenden Sonnenrad (29) abwälzen, sodass der Planetenträger (28) mitbewegt wird und das Drehmoment auf die Eingangsseite (14) des Torsionsdämpfers (12) überträgt.

2. Antriebsanordnung nach Anspruch 1, wobei bei sich bei geöffneter erster Kupplungsanordnung (34) das Sonnenrad (29) dreht, sodass das Drehmoment des Rotors (21) der elektrischen Maschine (20) nicht auf die Eingangsseite (14) des Torsionsdämpfers (12) übertragen wird.

3. Antriebsanordnung nach Anspruch 1 oder 2, ferner umfassend eine zweite Kupplungsanordnung (41), die ausgebildet und angeordnet ist, um eine Drehbewegung des Planetenträgers (28) gegenüber dem Hohlrad (30) zu sperren.

4. Antriebsanordnung nach Anspruch 3, wobei in einem Zustand in dem die erste Kupplungsanordnung (34) geöffnet ist und die zweite Kupplungsanordnung (41) geschlossen ist, der Planetenträger (28) direkt durch das Hohlrad (30) und den Rotor (21) angetrieben wird und das Drehmoment des Rotors (21) auf die Eingangsseite (14) des Torsionsdämpfers (12) überträgt.

5. Antriebsanordnung nach einem der vorhergehenden Ansprüche, ferner umfassend einen Sensor (35), der ausgebildet ist, um ein Sensorsignal zu erfassen, wobei basierend auf dem erfassten Sensorsignal eine Schaltzustand der Vorübersetzungseinrichtung (23) veränderbar ist.

## Claims

1. Drive arrangement (10) for damping and transmitting a torque of an internal combustion engine, having the following features:
- a torsion damper (12) with an input side (14) and an output side (16), wherein the output side (16) is designed to transmit a torque to an output drive side (18) of the drive arrangement (10);
- an electrical machine (20) which is designed to generate a torque;
- a pre-transmission device (23) which is designed to set transmission ratios for the torque of the electrical machine (20); wherein
- a torque of the internal combustion engine and, via the pre-transmission device (23), a torque of the electrical machine (20) can be applied to the input side (14) of the torsion damper (12); wherein
- the electrical machine (20) can be uncoupled, so that the torque of the electrical machine (20) is not introduced into the input side (14) of the torsion damper (12), wherein
- the pre-transmission device (23) comprises a planetary gear mechanism (23) having a ring gear (30) and having a planet carrier (28) which supports a plurality of planet gears (31) and wherein the planet gears (31) engage with the ring gear (30) and with a sun gear (29) of the planetary gear mechanism (23),
**characterized**
- **in that** the ring gear (30) is connected in a rotationally fixed manner to the rotor (21) of the electrical machine (20), and
- **in that** the planet carrier (28) is connected in a rotationally fixed manner to the input side (14) of the torsion damper (12), and wherein
- the pre-transmission device (23) has a first clutch arrangement (34) which is designed and arranged to block the ability of the sun gear (29) to rotate in a shift state with the first clutch arrangement (34) closed, so that in this way a torque is transmitted from the rotor (21) of the electrical machine (20) to the ring gear (30) and the ring gear (30) drives the planet gears (31) and these roll on the stationary sun gear (29), so that the planet carrier (28) is also moved and the torque is transmitted to the input side (14) of the torsion damper (12) .

2. Drive arrangement according to Claim 1, wherein, when the first clutch arrangement (34) is open, the sun gear (29) rotates, so that the torque of the rotor (21) of the electrical machine (20) is not transmitted to the input side (14) of the torsion damper (12).

3. Drive arrangement according to Claim 1 or 2, further comprising a second clutch arrangement (41) which is designed and arranged to block a rotational movement of the planet carrier (28) in relation to the ring gear (30) .

4. Drive arrangement according to Claim 3, wherein, in a state in which the first clutch arrangement (34) is open and the second clutch arrangement (41) is closed, the planet carrier (28) is driven directly by the ring gear (30) and the rotor (21) and the torque of the rotor (21) is transmitted to the input side (14) of the torsion damper (12).

5. Drive arrangement according to one of the preceding claims, further comprising a sensor (35) which is designed to detect a sensor signal, wherein a shift state of the pre-transmission device (23) can be changed on the basis of the detected sensor signal.

## Revendications

1. Ensemble d'entraînement (10) pour amortir et transmettre un couple d'un moteur à combustion interne, comprenant les particularités suivantes :
- un amortisseur de torsion (12) ayant un côté entrée (14) et un côté sortie (16), le côté sortie (16) étant réalisé pour transmettre un couple à un côté d'entraînement de sortie (18) du dispositif d'entraînement (10) ;
- une machine électrique (20) qui est réalisée pour générer un couple ;
- un dispositif de prétransmission (23) qui est réalisé pour multiplier/démultiplier le couple de la machine électrique (20) ; dans lequel
- le côté entrée (14) de l'amortisseur de torsion (12) peut être soumis à un couple du moteur à combustion interne et peut être soumis à un couple de la machine électrique (20) par l'intermédiaire du dispositif de prétransmission (23) ; dans lequel
- la machine électrique (20) peut être découplée de sorte que le couple de la machine électrique (20) n'est pas introduit dans le côté entrée (14) de l'amortisseur de torsion (12), dans lequel
- le dispositif de prétransmission (23) comprend un engrenage planétaire (23) comprenant une couronne (30) et un porte-satellites (28) qui loge une pluralité de roues planétaires (31), et les roues planétaires (31) sont en prise avec la couronne (30) et avec une roue solaire (29) de l'engrenage planétaire (23),
**caractérisé**
- **en ce que** la couronne (30) est reliée de manière verrouillée en rotation au rotor (21) de la machine électrique (20), et
- **en ce que** le porte-satellites (28) est relié de manière verrouillée en rotation au côté entrée (14) de l'amortisseur de torsion (12), et dans lequel
- le dispositif de prétransmission (23) présente un premier ensemble d'embrayage (34) qui est réalisé et disposé pour bloquer dans un état de commutation, lorsque le premier ensemble d'embrayage (34) est fermé, une mobilité en rotation de la roue solaire (29) de sorte qu'un couple est ainsi transmis du rotor (21) de la machine électrique (20) à la couronne (30) et la couronne (30) entraîne les roues planétaires (31) et celles-ci roulent sur la roue solaire (29) stationnaire de sorte que le porte-satellites (28) est également mis en mouvement et transmet le couple au côté entrée (14) de l'amortisseur de torsion (12).

2. Ensemble d'entraînement selon la revendication 1, dans lequel, lorsque le premier ensemble d'embrayage (34) est ouvert, la roue solaire (29) tourne de sorte que le couple du rotor (21) de la machine électrique (20) n'est pas transmis au côté entrée (14) de l'amortisseur de torsion (12).

3. Ensemble d'entraînement selon la revendication 1 ou 2, comprenant en outre un deuxième ensemble d'embrayage (41) qui est réalisé et disposé pour bloquer un mouvement de rotation du porte-satellite (28) par rapport à la couronne (30).

4. Ensemble d'entraînement selon la revendication 3, dans lequel, dans un état dans lequel le premier ensemble d'embrayage (34) est ouvert et le deuxième ensemble d'embrayage (41) est fermé, le porte-satellites (28) est entraîné directement par la couronne (30) et le rotor (21) et transmet le couple du rotor (21) au côté entrée (14) de l'amortisseur de torsion (12).

5. Ensemble d'entraînement selon l'une quelconque des revendications précédentes, comprenant en outre un capteur (35) qui est réalisé pour détecter un signal de capteur, dans lequel, sur la base du signal de capteur détecté, un état de commutation du dispositif de prétransmission (23) peut être modifié.
